# EUROPÄISCHE PATENTSCHRIFT

(11) **EP 1 729 433 B1**
(45) Veröffentlichungstag und Bekanntmachung des Hinweises auf die Patenterteilung: **14.11.2012**
(21) Anmeldenummer: 06010154.0
(22) Anmeldetag: 17.05.2006
(51) Int. Cl.: H04J 3/06

(54) **Verfahren zur Laufzeitkorrektur in einer Kommunikationsstruktur**
Method for correcting propagation delay in a communications structure
Procédé de correction de retard de propagation dans une structure de communication

(30) Priorität: 31.05.2005 DE 102005024759
(43) Veröffentlichungstag der Anmeldung: 06.12.2006
(73) Patentinhaber: Bosch Rexroth AG, 70184 Stuttgart (DE)
(72) Erfinder: Schultze, Stephan, Dr., 97816 Lohr (DE)

(56) Entgegenhaltungen:
- EP-A- 0 350 149
- WO-A-00/18050
- DE-A1- 19 917 354
- US-A- 5 059 926

## Beschreibung

### Stand der Technik

Die Erfindung betrifft ein Verfahren zur Laufzeitkorrektur in einer Kommunikationsstruktur mit einem Kommunikationssystem, welches mindestens einen Teilnehmer mit einem Zeitgeber aufweist, der über Leitungen zum Datenaustausch mit weiteren Teilnehmern verbunden ist, wobei über den Datenaustausch Korrekturwerte zur Laufzeitkompensation übertragen werden.

Derartige Kommunikationsstrukturen sind allgemein bekannt. Sie werden insbesondere im Feldbusbereich der Automatisierungstechnik und bei Maschinensteuerungen, beispielsweise für Werkzeugmaschinen oder für Druckmaschinen eingesetzt.

Bei derartigen Steuerungen ist es oftmals erforderlich, Ereignisse sehr zeitgenau zu erfassen und entsprechend auf die Ereignisse zu reagieren. Insbesondere bei Werkzeugmaschinen reichen die Genauigkeitsanforderungen bei Abmessungen in den Submikrometerbereich und bei Zeiten in den Submikrosekundenbereich. Zur Verknüpfung physikalischer Größen aus insbesondere räumlich verteilten Anlagenteilen ist sicherzustellen, dass die einzelnen Daten sich einander zeitlich entsprechen. Zeitliche Ungenauigkeiten verringern ansonsten die Qualität eines Prozesses.

Derartige Genauigkeitsanforderungen lassen sich in der Regel nur noch mit Zeitgebern realisieren, die jeder Einheit innerhalb der Kommunikationsstruktur zugeordnet und bei ihr oder in ihr angeordnet sind. Diese Zeitgeber müssen dabei untereinander synchronisiert werden. Aufgrund unvermeidbarer Gangunterschiede der einzelnen Zeitgeber muss die Synchronisation dabei immer wieder erneut durchgeführt werden. Dabei gehen insbesondere auch die Laufzeiten ein, welche Synchronisatiorissignale und andere Signale zwischen den Einheiten in der Kommunikationsstruktur benötigen.

Laufzeitänderungen während des Betriebes, wie sie beispielsweise infolge von Topologieänderungen auftreten können, werden im Stand der Technik über eine zyklische Ermittlung oder über Fehlerreaktionen kompensiert. Diese Verfahren beschreiben die Laufzeitkompensation bzw. die Bestimmung der Kompensationswerte in Kommunikationsstrukturen.

In Ethernet-basierten Kommunikationsstrukturen, wird gemäß IEEE 1588 beispielsweise eine ständig laufende Ermittlung der Kompensationswerte beschrieben. Dabei werden mit Synchronisations-Telegrammen die in der Kommunikationsstruktur verteilten Zeitgeber regelmäßig kalibriert. Dieses Verfahren ist unter dem Namen "Precision Clock Synchronization Protocol for Networked Measurment and Control Systems", abgekürzt PTP für "Precision Time Protocol" bekannt. Dieser Standard definiert ein Verfahren, um viele räumlich verteilte Echtzeituhren zu synchronisieren, die über ein paketfähiges Netzwerk, wie es das Ethernet beispielsweise darstellt, miteinander verbunden sind. Gemäß PTP etabliert sich ein Teilnehmer als Master-Uhr und sendet ein erstes softwaregeneriertes Synchronisationsteleiramm und nachfolgend ein Follow-up-Telegramm an die übrigen Teilnehmer (Slaves). Der Empfänger-Teilnehmer kann auf der Basis des ersten Telegramms sowie des Follow-up-Telegramms und seiner eigenen Uhr die Zeitdifferenz zwischen seiner Uhr und der Master-Uhr berechnen und somit eine Synchronisation vornehmen. Dieser Synchronisationsprozess wiederholt sich im Synchronisations-Telegramm-Takt..

Aus der DE 19917354 A1 ist ein Synchronisationsverfahren für eine Haupteinheit und mindestens einer Nebeneinheit mit internen, miteinander zu synchronisierenden Zeitgebern innerhalb einer Kommunikationsstruktur, insbesondere in einer ringförmigen Kommimikationsstruktur mit gegenläufigen Kommunikationswegen bekannt, wobei die Haupteinheit der Nebeneinheit über zwei Kommunikationswege Zeitsignale übermittelt, die auf den beiden Kommunikationswegen in der Regel unterschiedliche Laufzeiten T1 bzw. T2 zur Nebeneinheit benötigen. Dabei wird die Differenz dT der Laufzeiten T 1 und T2 zumindest in der Nebeneinheit erfasst und aus der Differenz dT die Laufzeiten T1, T2 ermittelt, wobei sich die Zeitgeber nach Ermittlung der Laufzeiten T1, T2 unter Berücksichtigung der Laufzeiten T1, T2 synchronisieren.

Die oben genannte Schrift sieht dabei vor, dass lediglich als Reaktion auf eine Fehlermeldung, die als Indiz für eine Änderung der Systemkonfiguration generiert wird, eine Laufzeitkompensationsermittlung erneut gestartet werden kann. Ein gesteuerter Eingriff ist dabei nicht möglich.

Es ist Aufgabe der Erfindung, ein Verfahren zur Laufzeitkorrektur bereitzustellen, welches einen gezielten Eingriff in die Laufzeitkompensation erlaubt.

### Vorteile der Erfindung

Die Aufgabe wird dadurch gelöst, dass die Korrekturwerte zur Laufzeitkompensation gezielt vorgegeben werden. Vorteilhaft ist dabei, dass sowohl keine Fehlerreaktionen abzuwarten sind und kein Ausnahmezustand mit üblichen Fehlermeldungen auszuführen ist. Eine Fehlerreaktion und ggf. auch weitere Fehlermeldungen auf einem anderen Fehlermeldesystem können damit komplett vermieden werden.

Eine Vorgabe kann dabei in bevorzugter Ausführungsform durch eine Neuermittlung der Korrekturwerte zur Laufzeitkompensation eingeleitet werden. Dabei können Algorithmen zur Ermittlung der Korrekturwerte, die bei einer normalen Fehlerreaktion ausgeführt werden, verwendet werden. Die gezielte Einleitung kann beispielsweise durch die Eingabe eines simulierten Fehlers erfolgen.

In einer weiteren bevorzugten Ausführungsform kann die Vorgabe der Korrekturwerte manuell durchgeführt werden. Dies ermöglicht beispielsweise spezielle Anpassungen an die Topologie.

Insbesondere wenn zwischen zwei oder mehreren verschiedenen Topologien umgeschaltet werden soll, kann eine Rückspeicherung gespeicherter Korrekturwerte zur Laufzeitkompensation für die verschiedenen Topologien vorteilhaft sein. Entsprechende Datensätze für die Korrekturwerte können beispielsweise aus einem Speicher oder auch manuell für verschiedene Topologien direkt vorgegeben werden. Ein weiterer Vorteil ergibt sich für den Fall, wenn die ursprüngliche Topologie durch innere oder äußere Einflüsse in einen fehlerhaften Zustand übergeht. Für diesen Fall können dann direkt die alten Werte rückgespeichert werden, was einem gezielten "Reset" entspricht.

Eine gesteuerte Neuermittlung bzw. gezielte Vorgabe der Korrekturwerte oder auch eine Rückspeicherung gespeicherter Korrekturwerte zur Laufzeitkompensation ist insbesondere bei einer expliziten Topologieänderung vorteilhaft, und kann auch automatisiert durchgeführt werden.

Wird die gezielte Vorgabe der Korrekturwerte zur Laufzeitkomperisation in einer Kommunikationsstruktur durchgeführt, die eine Kommunikationssteuerung (Controller) als Haupteinheit und mindestens einen weiteren Teilnehmer im Kommunikationssystem als Nebeneinheit aufweist, können auch komplexe Kommunikationsstrukturen neu initialisiert werden.

Dabei ist es vorteilhaft, wenn die gezielte Vorgabe der Korrekturwerte zur Laufzeitkompensation von der Kommunikationssteuerung oder von einem der Teilnehmer des Kommunikationssystems initiiert wird. Dabei kann beispielsweise die Kommunikationssteuerung die zentrale Kontrolleinheit einer Maschine darstellen, von der gezielt entsprechende Befehle durch den Bediener eingegeben werden können. Andererseits kann dies auch von einer Nebenstelle erfolgen, insbesondere dann, wenn es sich um weit verzweigte Kommunikationsstrukturen handelt.

Wird die gezielte Vorgabe der Korrekturwerte zur Laufzeitkompensation in einer Kommunikationsstruktur durchgeführt, die eine ringförmige Struktur aufweist, kann dieses Verfahren insbesondere in Anlagen mit erhöhten Verfügbarkeitsanforderungen eingesetzt werden.

Insbesondere ist die Durchführung einer gezielten Vorgabe der Korrekturwerte zur Laufzeitkompensation in einer Kommunikationsstruktur vorteilhaft, die eine gegenläufig redundante ringförmige Struktur aufweist. Bei einem Fehler einer Kommunikationsverbindung und / oder eines Teilnehmers kann automatisch auf den redundanten Pfad umgeschaltet werden.

Werden die Korrekturwerte zur Laufzeitkompensation in einer Kommunikationsstruktur mit ringförmiger Struktur zyklisch ermittelt, muss die Erkennung einer Topologieänderung nicht implementiert werden.

In vorteilhafter Ausführungsform kann die Durchführung einer gezielte Vorgabe der Korrekturwerte zur Laufzeitkompensation in einer Kommunikationsstruktur erfolgen, die auf einem Ethernet-System basiert und bei dem die Teilnehmer untereinander und / oder mit der Kommunikationssteuerung über den Datenaustausch Ethemet-Telegramme austauschen. Derartige Netze ermöglichen eine durchgehende, einheitliche Kommunikation auf allen Ebenen eines Kommunikationsnetzes. Insbesondere komplexe Werkzeugmaschinen, Fertigungsroboter, Verpackungsmaschinen oder große Druckmaschinen sind Beispiele für Ethernet-basierte Netze.

Insbesondere der Einsatz des Verfahrens in einer Kommunikationsstruktur, die für Automatisierungszwecke eingesetzt werden, bietet dabei besondere Vorteile.

In einer Kommunikationsstruktur, die für eine Echtzeitkommunikation eingesetzt wird, bietet die Durchführung dieses Verfahrens den Vorteil, dass eine gezielte Ermittlung der Korrekturwerte zur Laufzeitkompensation auch bei hochpräzisen Maschinen, wo es auf eine hohe Orts-und Zeitauflösung ankommt, einsetzbar ist.

### Zeichnung

Die Erfindung wird im Folgenden anhand eines in den Figuren dargestellten Ausführungsbeispiels näher erläutert. Es zeigen:
Figur 1 in schematischer Darstellung eine Kommunikationsstruktur in Doppelringtopologie
Figur 2 in Diagramdarstellung die Zustandsänderungen einer Topologie

### Beschreibung der Ausführungsbeispiele

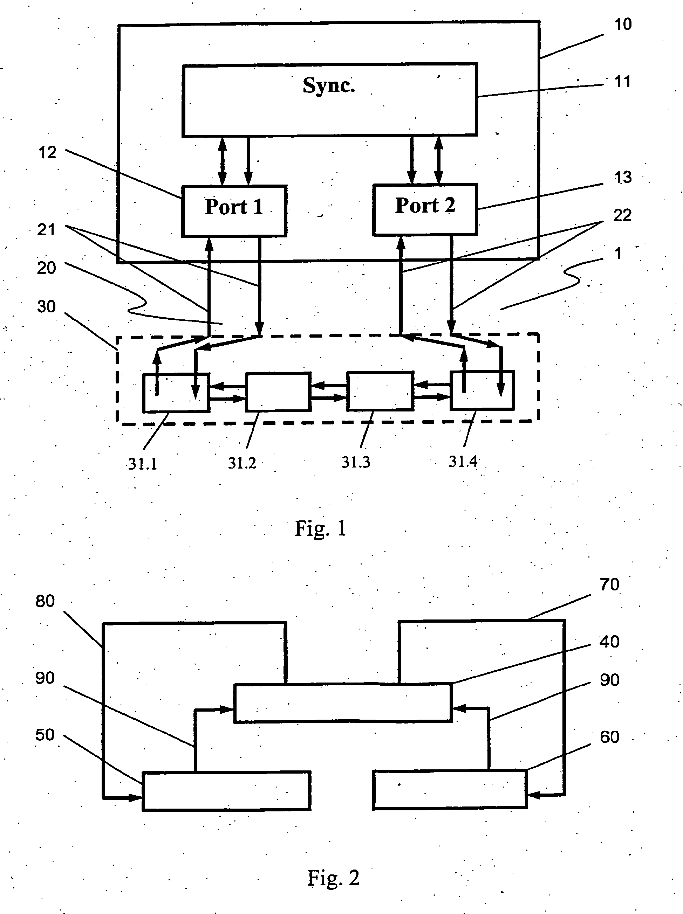

Figur 1 zeigt in schematischer Darstellung ein Ausführungsbeispiel einer Kommunikationsstruktur 1, die eine Kommunikationssteuerung 10 als Haupteinheit und ein Kommunikationssystem 30, bestehend aus mehreren Teilnehmern 31.1, 31.2, 31.3, 31.4, aufweist. Die Kommunikationssteuerung 10 weist im gezeigten Beispiel als integraler Bestandteil eine Synchronisationseinheit 11 (Sync.) auf, die den internen Datenaustausch zu einer ersten Schnittstelle 12 (Port 1) und einer zweiten Schnittstelle 13 (Port 2) ermöglicht.

Die Teilnehmer 31.1, 31.2, 31.3, 31.4 des Kommunikationssystems 30 sind im gezeigten Beispiel als Nebeneinheiten ausgebildet und sind über zwei gegenläufig ringförmige Kommunikationswege miteinander verbunden. Ein Datenaustausch 20 erfolgt mit der ersten Schnittstelle 12 der Kommunikationssteuerung 10 über eine erste E/A-Verbindung 21. Der Datenaustausch 20 mit der zweiten Schnittstelle 13 erfolgt über eine zweiten E/A-Verbindung 22. Die verschiedenen Kommunikationswege können dabei Lichtwellenleiter und / oder als Drahtverbindung, z.B. als Profibus oder Ethernetverbindung ausgebildet sein.

In den Teilnehmern 31.1, 31.2, 31.3, 31.4 sind Zeitgeber angeordnet, welche miteinander synchronisiert werden, wobei Abschnittslaufzeiten zwischen den Teilnehmern 31.1, 31.2, 31.3, 31.4 berücksichtigt werden. Dies geschieht üblicherweise nach dem Verfahren, wie es im Stand der Technik beschrieben ist.

Neben dem Austausch von Korrekturwerten zur Laufzeitkompensation über den Datenaustausch 20 ist erfindungsgemäß bei dem Verfahren zur Laufzeitkorrektur in der laufzeitbehafteten Kommunikationsstruktur 1 auch vorgesehen, dass die Korrekturwerte zur Laufzeitkompensation gezielt vorgegeben werden können. Dies kann einerseits durch eine gesteuerte Neuermittlung und / oder durch eine manuelle Vorgabe der Korrekturwerte geschehen. Dies ist insbesondere bei explizit vorgegebenen Topologieänderungen vorteilhaft.

Weiterhin ist auch eine gezielte Rückspeicherung von bereits gespeicherten Korrekturwerten zur Laufzeitkompensation möglich, was beispielsweise beim gezielten Umschalten von einer Topologie auf eine andere Topologie vorteilhaft sein kann. Im Hinblick auf eine fehlerhafte Topologie kann eine gezielte Rückspeicherung zur Wiederherstellung ebenfalls vorteilhaft sein.

Das Verfahren wird nachfolgend anhand einer redundanten Doppelringtopologie, wie sie in Figur 1 dargestellt ist erläutert.

Bei einem Fehler in einer der Kommunikationsverbindungen wird automatisch auf einen redundanten Pfad umgeschaltet. Aufgrund der Fehlerreaktion wird eine automatische Neuermittlung der Laufzeitkorrekturwerte gestartet, wie dies beispielsweise in der DE 19917354 A1 beschrieben wird. Beim Rückschalten in die ursprüngliche Topologie wird am zentralen Knoten eine Aktion, beispielsweise ein Knopfdruck "Fehler löschen", vorgegeben, die neben der Wiederherstellung der ursprünglichen redundanten Topologie auch die Neuermittlung der Laufzeitkorrektur direkt mit vorgibt. Eine Fehlerreaktion muss dabei nicht abgewartet werden. So entsteht auch kein spezieller Ausnahmezustand, der in einer besonderen Prozedur abgearbeitet werden müsste. Ggf. können damit auch weitere Fehlermeldungen in einem Fehlermeldesystem vermieden werden.

In einem zweiten Beispiel sollen ein oder mehrere Teilnehmer aus der Topologie herausgenommen werden. Dies wird mit einer gezielten Umschaltung der Topologie erreicht. Um auch hier nicht eine Fehlerreaktion auszuführen, wird gleichzeitig die Neuermittlung der Korrekturwerte angestoßen.

Figur 2 zeigt in Diagramdarstellung die Zustandsänderungen einer Topologie. Gemäß dem Stand der Technik wird ausgehend von einer fehlerfreien ursprünglichen Topologie 40 durch einen Fehler eine Fehlerreaktion 70 erzeugt. Als Reaktion auf die Fehlermeldung wird eine Neuermittlung der Korrekturwerte für die Laufzeitkompensation angestoßen, so dass aus einer fehlerhaften Topologie 60 eine Wiederherstellung 90 der fehlerfreien ursprünglichen Topologie 40 erfolgt.

Im anderen Zweig des Diagrams erfolgt, ausgehend von der ursprünglichen Topologie 40 eine gezielte Umschaltung 80 auf eine, beispielsweise als Bypass ausgelegten umgeschalteten Topologie 50. Dies kann als Reaktion auf eine Fehlermeldung und / oder als gesteuerte Neuermittlung der Korrekturwerte erfolgen. Weiterhin können bekannte Korrekturwerte manuell und / oder aus einem Speicher vorgegeben werden. Von der umgeschalteten Topologie 50 können wiederum als Reaktion auf eine Fehlermeldung und / oder als gesteuerte Neuermittlung der Korrekturwerte und / oder bekannte Korrekturwerte manuell und / oder aus einem Speicher vorgegeben werden. Eine Wiederherstellung 90 der ursprünglichen Topologie 40 erfolgt dabei beispielsweise vorteilhaft durch eine Verwendung "alter Wert" als Vorgabe.

Mit dem beschriebenen Verfahren können insbesondere bei Topologieänderungen gezielt die Korrekturwerte für eine Laufzeitkompensation initiiert werden. Fehlerreaktionen müssen nicht erst abgewartet werden, sondern der gezielte Eingriff kann direkt erfolgen.

### Bezugszeichenliste

### Verfahren zur Laufzeitkorrektur in einer Kommunikationsstruktur

- 1: Kommunikationsstruktur

- 10: Kommunikationssteuerung
- 11: Synchronisationseinheit
- 12: Schnittstelle
- 13: Schnittstelle

- 20: Datenaustausch
- 21: E/A-Verbindung
- 22: E/A-Verbindung

- 30: Kommunikationssystem
- 31.1: Teilnehmer 1
- 31.2: Teilnehmer 2
- 31.3: Teilnehmer 3
- 31.4: Teilnehmer 4

- 40: ursprüngliche Topologie

- 50: umgeschaltete Topologie

- 60: fehlerhafte Topologie

- 70: Fehlerreaktion

- 80: gezielte Umschaltung

- 90: Wiederherstellung

## Patentansprüche

1. Verfahren zur Laufzeitkorrektur in einer Kommunikationsstruktur (1) mit einem Kommunikationssystem (30), welches mindestens einen Teilnehmer (31.1) mit einem Zeitgeber aufweist, der über Leitungen zum Datenaustausch (20) mit weiteren Teilnehmern (31.2, 31.3, 31.4) verbunden ist, wobei über den Datenaustausch (20) Korrekturwerte zur Laufzeitkompensation übertragen werden, **dadurch gekennzeichnet, dass** die Korrekturwerte zur Laufzeitkompensation gezielt vorgegeben werden und dass die gezielte Vorgabe der Korrekturwerte explizit bei einer Topologieänderung durchgeführt wird.

2. Verfahren nach Anspruch 1, **dadurch gekennzeichnet, dass** die Vorgabe durch eine Neuermittlung der Korrekturwerte zur Laufzeitkompensation eingeleitet wird.

3. Verfahren nach einem der Ansprüche 1 oder 2, **dadurch gekennzeichnet, dass** die Vorgabe der Korrekturwerte manuell durchgeführt wird.

4. Verfahren nach einem der Ansprüche 1 bis 3, **dadurch gekennzeichnet, dass** eine Rückspeicherung gespeicherter Korrekturwerte zur Laufzeitkompensation ermöglicht wird.

5. Verfahren nach einem der Ansprüche 1 bis 4, **dadurch gekennzeichnet, dass** die gezielte Vorgabe der Korrekturwerte zur Laufzeitkompensation in einer Kommunikationsstruktur (1) durchgeführt wird, die eine Kommunikationssteuerung (10) als Haupteinheit und mindestens einen weiteren Teilnehmer (31.1) im Kommunikationssystem (30) als Nebeneinheit aufweist.

6. Verfahren nach einem der Ansprüche 1 bis 5, **dadurch gekennzeichnet, dass** die gezielte Vorgabe der Korrekturwerte zur Laufzeitkompensation von der Kommunikationssteuerung (10) oder von einem der Teilnehmer (31.1,31.2,31.3,31.4) des Kommunikationssystems (30) initiiert wird.

7. Verfahren nach einem der Ansprüche 1 bis 6, **dadurch gekennzeichnet, dass** die gezielte Vorgabe der Korrekturwerte zur Laufzeitkompensation in einer Kommunikationsstruktur (1) durchgeführt wird, die eine ringförmige Struktur aufweist.

8. Verfahren nach einem der Ansprüche 1 bis 7, **dadurch gekennzeichnet, dass** die gezielte Vorgabe der Korrekturwerte zur Laufzeitkompensation in einer Kommunikationsstruktur (1) durchgeführt wird, die eine gegenläufig redundante ringförmige Struktur aufweist.

9. Verfahren nach einem der Ansprüche 7 oder 8, **dadurch gekennzeichnet, dass** die Korrekturwerte zur Laufzeitkompensation in einer Kommunikationsstruktur (1) mit ringförmiger Struktur zyklisch ermittelt werden.

10. Verfahren nach einem der Ansprüche 1 bis 9, **dadurch gekennzeichnet, dass** die gezielte Vorgabe der Korrekturwerte zur Laufzeitkompensation in einer Kommunikationsstruktur (1) durchgeführt wird, die auf einem Ethernet-System basiert und bei dem die Teilnehmer (31.1,31.2, 31.3, 31.4) untereinander und / oder mit der Kommunikationssteuerung (10) über den Datenaustausch (20) Ethernet-Telegramme austauschen.

11. Verfahren nach einem der Ansprüche 1 bis 10, **dadurch gekennzeichnet, dass** die gezielte Vorgabe der Korrekturwerte zur Laufzeitkompensation in einer Kommunikationsstruktur (1) durchgeführt wird, die für Automatisierungszwecke eingesetzt werden.

12. Verfahren nach einem der Ansprüche 1 bis 11, **dadurch gekennzeichnet, dass** die gezielte Vorgabe der Korrekturwerte zur Laufzeitkompensation in einer Kommunikationsstruktur (1) durchgeführt wird, die für eine Echtzeitkommunikation eingesetzt wird.

## Claims

1. Method for correcting propagation delay in a communication structure (1) having a communication system (30) which has at least one subscriber (31.1) having a timer which is connected to further subscribers (31.2, 31.3, 31.4) by means of lines for the purpose of data interchange (20), wherein the data interchange (20) is used to transmit correction values for compensating for propagation delay, **characterized in that** the correction values for compensating for propagation delay are prescribed in targeted fashion and **in that** the targeted prescribing of the correction values is performed explicitly in the event of a change of topology.

2. Method according to Claim 1, **characterized in that** the prescribing is initiated by reassertainment of the correction values for compensating for propagation delay.

3. Method according to either of Claims 1 and 2, **characterized in that** the prescribing of the correction values is performed manually.

4. Method according to one of Claims 1 to 3, **characterized in that** restorage of stored correction values for compensating for propagation delay is made possible.

5. Method according to one of Claims 1 to 4, **characterized in that** the targeted prescribing of the correction values for compensating for propagation delay is performed in a communication structure (1) which has a communication controller (10) as a primary unit and at least one further subscriber (31.1) in the communication system (30) as a secondary unit.

6. Method according to one of Claims 1 to 5, **characterized in that** the targeted prescribing of the correction values for compensating for propagation delay is initiated by the communication controller (10) or by one of the subscribers (31.1, 31.2, 31.3, 31.4) in the communication system (30).

7. Method according to one of Claims 1 to 6, **characterized in that** the targeted prescribing of the correction values for compensating for propagation delay is performed in a communication structure (1) which has an annular structure.

8. Method according to one of Claims 1 to 7, **characterized in that** the targeted prescribing of the correction values for compensating for propagation delay is performed in a communication structure (1) which has an annular structure with contrary redundancy.

9. Method according to either of Claims 7 and 8, **characterized in that** the correction values for compensating for propagation delay are ascertained cyclically in a communication structure (1) having an annular structure.

10. Method according to one of Claims 1 to 9, **characterized in that** the targeted prescribing of the correction values for compensating for propagation delay is performed in communication structure (1) which is based on an Ethernet system and in which the subscribers (31.1, 31.2, 31.3, 31.4) interchange Ethernet messages with one another and/or with the communication controller (10) by means of the data interchange (20).

11. Method according to one of Claims 1 to 10, **characterized in that** the targeted prescribing of the correction values for compensating for propagation delay is performed in a communication structure (1) which is used for automation purposes.

12. Method according to one of Claims 1 to 11, **characterized in that** the targeted prescribing of the correction values for compensating for propagation delay is performed in a communication structure (1) which is used for real-time communication.

## Revendications

1. Procédé de correction du temps de propagation dans une structure de communication (1) comprenant un système de communication (30) qui comporte au moins un abonné (31.1) ayant un temporisateur, qui est connecté par l'intermédiaire de lignes destinées à l'échange de données (20) avec d'autres abonnés (31.2, 31.3, 31.4), dans lequel des valeurs de correction sont transmises par l'intermédiaire de l'échange de données (20) pour effectuer une compensation du temps de propagation, **caractérisé en ce que** les valeurs de correction destinées à la compensation du temps de propagation sont préréglées de manière ciblée et **en ce que** le préréglage ciblé des valeurs de correction est effectué de manière explicite lors d'une modification de topologie.

2. Procédé selon la revendication 1, **caractérisé en ce que** le préréglage est déclenché par une nouvelle détermination des valeurs de correction pour la compensation du temps de propagation.

3. Procédé selon l'une quelconque des revendications 1 ou 2, **caractérisé en ce que** le préréglage des valeurs de correction est effectué manuellement.

4. Procédé selon l'une quelconque des revendications 1 à 3, **caractérisé en ce qu'**un stockage à nouveau de valeurs de correction stockées est rendu possible pour la compensation du temps de propagation.

5. Procédé selon l'une quelconque des revendications 1 à 4, **caractérisé en ce que** le préréglage ciblé des valeurs de correction est effectué pour la compensation du temps de propagation dans une structure de communication (1) qui comporte une unité de commande de communication (10) en tant qu'unité principale et au moins un autre abonné (31.1) dans le système de communication (30) en tant qu'unité auxiliaire.

6. Procédé selon l'une quelconque des revendications 1 à 5, **caractérisé en ce que** le préréglage ciblé des valeurs de correction pour la compensation du temps de propagation est déclenché par l'unité de commande de communication (10) ou par l'un des abonnés (31.1, 31.2, 31.3, 31.4) du système de communication (30).

7. Procédé selon l'une quelconque des revendications 1 à 6, **caractérisé en ce que** le préréglage ciblé des valeurs de correction destiné à la compensation du temps de propagation est effectué dans une structure de communication (1) qui comporte une structure en anneau.

8. Procédé selon l'une quelconque des revendications 1 à 7, **caractérisé en ce que** le préréglage ciblé des valeurs de correction destiné à la compensation du temps de propagation est effectué dans une structure de communication (1) qui comporte une structure en anneau redondante à circulation en sens opposé.

9. Procédé selon l'une quelconque des revendications 7 ou 8, **caractérisé en ce que** les valeurs de correction destinées à la compensation du temps de propagation sont obtenues de manière cyclique dans une structure de communication (1) au moyen d'une structure en anneau.

10. Procédé selon l'une quelconque des revendications 1 à 9, **caractérisé en ce que** le préréglage ciblé des valeurs de correction destiné à la compensation du temps de propagation est effectué dans une structure de communication (1) à base de système Ethernet et dans lequel les abonnés (31.1, 31.2, 31.3, 31.4) échangent entre eux et/ou avec l'unité de commande de communication (10) des télégrammes Ethernet par l'intermédiaire de l'échange de données (20).

11. Procédé selon l'une quelconque des revendications 1 à 10, **caractérisé en ce que** le préréglage ciblé des valeurs de correction destiné à la compensation du temps de propagation s'effectue dans une structure de communication (1) qui est utilisée à des fins d'automatisation.

12. Procédé selon l'une quelconque des revendications 1 à 11, **caractérisé en ce que** le préréglage ciblé des valeurs de correction destiné à la compensation du temps de propagation est effectué dans une structure de communication (1) qui est utilisée pour une communication en temps réel.
